# EUROPEAN PATENT APPLICATION

(11) **EP 2 733 926 A1**
(43) Date of publication of application: **21.05.2014**
(21) Application number: 12193098.6
(22) Date of filing: 16.11.2012
(51) Int. Cl.: H04N 5/272, H04N 5/265

(54) **Method of operating a video processing apparatus**

(71) Applicant: PIXarithmic GmbH, 64331 Weiterstadt (DE)
(72) Inventor: Obstfelder, Juergen, 35606 Solms (DE)
(74) Representative: Rossmanith, Manfred

(57) **Abstract**

In video productions the production signal is frequently a composed image consisting of many different source signals. A typical example of such composed images are news programs, sales programs etc. where significant portions of the composed image consists of inserted advertisements, stock market information, breaking news and the like as inserted tiles or bars. The total number of input signals involved to create the composed image can easily reach approximately 15. Normally, the necessary bandwidth to transfer all input signals is simply not available in IP networks. Therefore, a new method for operating video processing system based on IP networks is suggested. The method proposes to transfer only the relevant parts of the input signals which are needed to create a composed image and thus effectively limit bandwidth requirements.

## Description

### Field of the Invention

According to a first aspect the present invention is related to a method of operating a video/audio processing apparatus. In particular the present invention is related to a method according to claim 1. According to a second aspect the present invention is related to a video/audio processing apparatus.

### Background

Live video productions such as TV productions are realized today using vision mixers. Vision mixers are commercially available e.g. from the companies Grass Valley, Sony, Snell & Wilcox, and Ross.

A vision mixer (also called video switcher, video mixer, production switcher or simply mixer) is a device used to select between different video input signals to generate a video output signal. Besides creating different kinds of transitions the vision mixer can generate a multitude of video effects and comprises keyers, matte generators, text generators etc. By means of the vision mixer the user also controls the routing of signals from various sources to selectable destinations.

The vision mixer also performs the routing and switching of audio signals accompanying the video signals. However, since the processing of video signals is more complex than the processing of audio signals the present patent application is focused on the video signal. It is to be understood that in the context of the present patent application the processing of the video signal also implies a corresponding processing of an accompanying audio signal. Only for the sake of better intelligibility of the description of the present invention audio signals are not always mentioned in addition to the video signals.

In order to enable the multiple functionalities of vision mixers they consist of a huge amount of hardware components to process the video signals. The processing hardware components are located in one housing and are connected with local bus solutions in order to control all video processing hardware in real-time to meet the fast control requirements of live productions.

A conventional vision mixer comprises a central mixing electronic, several input channels and at least one output channel, a control unit and a user interface. Such kind of vision mixer is described for example in DE 103 36 214 A1.

The mixing electronic is provided with up to 100 or even more video input signals at the same time. The input signals are live video signals from cameras, recorded video clips from a server such as archived material, slow-motion clips from dedicated slow-motion servers, synthetic images, animations and alphanumeric symbols from graphic generators. Until present, FPGAs (field-programmable gate arrays) are used to process video.

Current vision mixers are expensive and difficult to operate. The European patent application EP 12175474.1 (attorney file reference 120014P) proposes to replace today's existing video processing systems/video production systems based on dedicated hardware by graphical processing unit (GPU) based processing units which are communicatively connected by an IP network structure. Typically, the network is operated by a TCP/IP protocol. In principle, this system allows routing any source or input signal to any destination. However, the currently available bandwidth of IP networks does not allow routing any input signal to any destination simultaneously.

The present invention aims at alleviating bandwidth issues related with distributed video/audio processing systems connected by an IP network structure.

### Summary of the Invention

According to a first aspect the present invention suggests a method of operating a video/audio processing apparatus, wherein the system comprises a plurality of input units and a processing unit connected by data links for communicating packetized data. The method comprises the following steps:
a) receiving input signals at the input units; b) selecting a main input signal which forms a main portion of a composed image; c) selecting an additional input signal to form a portion of the composed image at a predefined position and of a predefined size in the composed image; d) selecting this portion of predefined size and of predefined position in the composed image; e) sending information about the selected image portion to the input unit which transmits the additional input signal to transmit only the part of the input signal forming this selected portion of the composed image.

Advantageously the method further comprises the step of repeating the steps d) to f).

In an advantageous embodiment the method further comprises the step of sending the information about the selected image portion to the input unit which provides the main input signal to prevent this input unit from sending the part of the main input signal which corresponds to the selected image portion.

In another embodiment the method further comprises the step of processing the selected input signals on the level of the processing unit to form the composed image.

In yet another inventive embodiment the method further comprises the step of generating a key-signal for inserting the additional selected input signal into the main input signal. In this case the method can further comprise the step of transmitting the key-signal to the processing unit only as a luminance signal.

According to a second aspect the present invention suggests a processing apparatus which is adapted for executing the inventive method.

### Drawings

In the drawing an embodiment of the present invention is illustrated. Features which are the same in the figures are labeled with the same or a similar reference numbers. It shows:
Fig. 1 a schematic block diagram of a conventional vision mixer;
Fig. 2 a schematic block diagram of a system for video processing which is operated by a method according to the present invention;
Fig. 3 a another schematic block diagram of a system for video processing;
Figs. 4A to 4F different levels of a composed image; and
Fig. 5 a flow diagram illustrating the method according to the invention.

### Detailed description

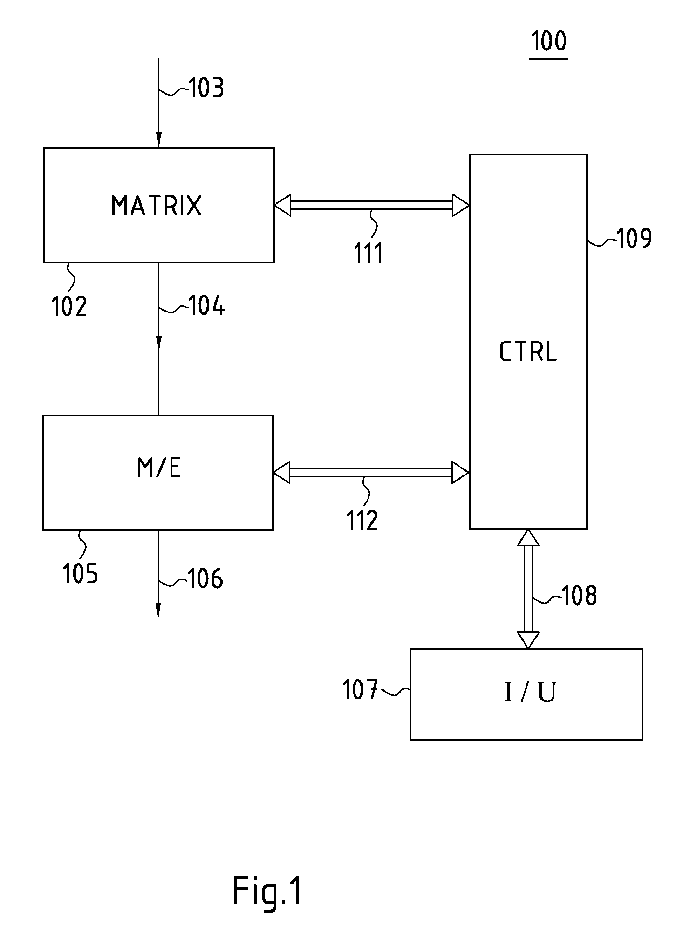

Figure 1 shows a schematic block diagram of a conventional vision mixer 100 which is also briefly called mixer. The mixer 100 comprises a cross point matrix or matrix 102 having a plurality of video inputs and a plurality of video outputs symbolized by arrows 103 and 104, respectively. Professional vision mixers are using serial digital interface (SDI) digital data for receiving or sending video data. The SDI digital data also comprise embedded audio streams, ancillary data, clock data and meta data. In a 1.5 Gbit/s data stream (1080i/720p picture format) there are 16 embedded audio channels and in a 3.0 Gbit/s data stream (1080p picture format)there are 32 embedded audio streams. The mixer 100 can send and receive digital data also in other formats. The matrix 102 is adapted for connecting any one of the video inputs with any one of the video outputs in response to a user command. The output channels of the matrix 102 are provided to a video effect stage (M/E stage) 105 of a mixer. The video output signal processed by the M/E stage 105 is indicated with an arrow 106. The functionalities of mixer 100 are controlled by means of an input unit 107 into which the user can enter control commands to control and execute the processing of the video input signals and to create and to produce a desired video output signal. The input unit 107 transfers the control commands via the data and control bus 108 to a control unit 109. The control unit 109 interprets the user input commands and addresses corresponding command signals to the matrix 102 and the M/E stage 105. For this purpose the control unit 109 is connected with the matrix 102 and the M/E stage 105 with data and control buses 111 and 112, respectively. The buses 108, 111, and 112 are bidirectional buses allowing return messages to the control unit 109 and the input unit 107. The return messages provide feedback of the operating status of matrix 102 and the M/E stage 105. The input unit 107 displays status indicators reflecting the operating status of the mixer 100 for the information of the user.

Modern vision mixers are provided with many more video input and output channels as it has been mentioned above and comprise up to eight downstream keyers. In consequence such a modern vision mixer is provided with more than 1000 pushbuttons. Obviously, a modern vision mixer is a complicated and expensive hardware device which is difficult to operate.

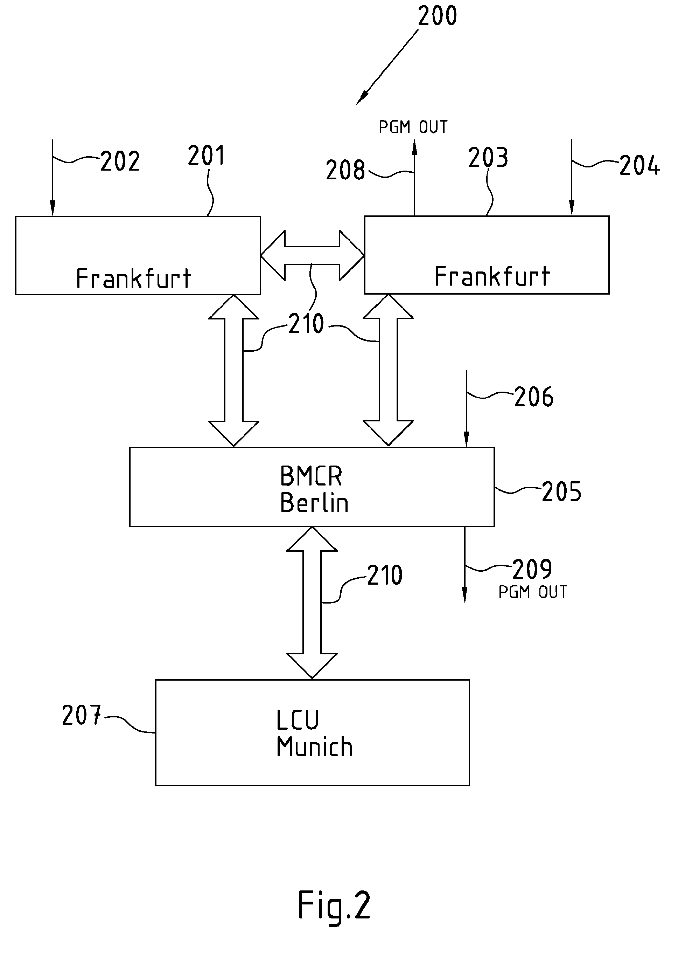

Figure 2 shows a schematic block diagram of the architecture of an alternative system for processing video and/or audio signals which has been described in detail in the European patent application EP12175474.1 filed by the same applicant. The proposed architecture of the inventive system allows building the hardware platform on standardized IT technology components such as servers, graphical processing units (GPU) and high-speed data links. Typically, these standardized IT components are less costly than dedicated broadcast equipment components. Besides the cost advantage the proposed system benefits automatically from technological progress in the area of the above-mentioned IT components. In the proposed system video processing hardware is split into smaller and flexible video processing units and combines dedicated control, video and audio interconnections into one logical data link between the individual processing units. The data links are designed such that they have a reliable and constant time relation. The data links are typically based on a reliable bidirectional high-speed data connection such as LAN or WAN. The individual processing units work independently as fast as possible to achieve or even exceed real-time processing behavior. Normally, real-time processing means that the processing is finished until the next video frame arrives. Therefore, the term "real-time" is a relative term and depends on the video frame rate. The system ensures that overall production real-time behavior with simultaneous processing is achieved and generates a consistent production signal PGM - OUT. This general concept is described in greater detail in the following.

In the video processing system according to the present invention the video processing hardware is organized in processing units 201, 203, 205, and 207 according to the geographical distribution of a production i.e. according to the geographical distribution of the resources enabling the production as it is shown schematically in figure 2. The technical core of each processing unit is a server, one or several graphical processing units (GPUs) and high-speed data links operated by a processing application framework and dedicated algorithms. The processing application framework and the algorithms are realized in software. The algorithms are adaptable and extendable to also realize further functionalities going beyond the functionalities of conventional vision mixers. The video signals are processed by GPUs in commercially available graphic cards. Hence, conventional video processing by dedicated hardware is replaced by software running on standardized IT components. All the processing capabilities of the GPUs are available and enable new video effects.

The operator controls the whole production as if it would be at one single production site in a single production unit next to the control room. The entire production process is moved from dedicated video/audio and control routing to common data links. The individual wiring hardware such as SDI connections is replaced by standardized data networks. The routing of all signals in the data networks is bidirectional and the production output and monitoring signals like dedicated multi-view outputs can be routed to any production unit which is connected in the network without extra cabling expenses.

High-speed data networks are more and more available not only in video production sites such as film or TV studios but also in wide area distribution networks, e.g. multiple of 10 G Ethernet or Infiniband.

In studios, professional video networking means that the video content is transferred uncompressed. For HDTV formats 1080i/720p data rates of 1.5 Gbit/s are resulting in studio environment where uncompressed audio and video data are used. For HD format 1080p a net data rate of even 3.0 Gbit/s is resulting.

Referring back to figure 2 every block represents one of the distributed processing units belonging to the system which is referred to in its entirety with reference number 200. In the exemplary embodiment shown in Figure 2 processing unit 201 is located in a football stadium in Frankfurt. Processing unit 201 receives as local sources 202 camera signals from the Stadium, slow-motion video from a local slow-motion server and eventually audio and video signals from an interview taking place locally. Processing unit 203 is also located in Frankfurt but not necessarily in the same place as processing unit 201. Processing unit 203 receives camera signals as local sources 204 from a live presenter in an interview room. Processing unit 205 is located in Berlin and represents the main processing room providing additional processing power for the ongoing production as well as access to archives and servers where for example advertisement clips are stored. The archives and the servers are indicated as local sources 206. The local sources 202, 204, and 206 provide the video and/or audio signals as SDI or streaming data. Finally, there is a processing unit 207 which represents the live control unit (LCU) located in Munich from where the live production is controlled and monitored. The production result is leaving processing units 203 and 205 as video and audio output signals PGM - OUT 208 and 209 for being broadcasted. The processing units 201, 203, 205, and 207 are interconnected with each other with reliable bidirectional high-speed data links 210 as shown in figure 2. The data links 210 enable communication between the processing units 201, 203, 205, and 207 and provide constant and known signal delays between the production units. It is noted that the high-speed data links 210 represent logical data links which are independent of a specific hardware realization. For example, the data links 210 can be realized with a set of several cables. In the situation shown in figure 2 the data links 210 are an Internet protocol (IP) wide area network (WAN). In a WAN special measures have to be taken to make sure that the data packages are received in the same sequence as they have been sent over the network to meet the requirements of video processing. Appropriate measures can be taken on the protocol and/or hardware level of the network such that the system behaves like a single big vision mixer.

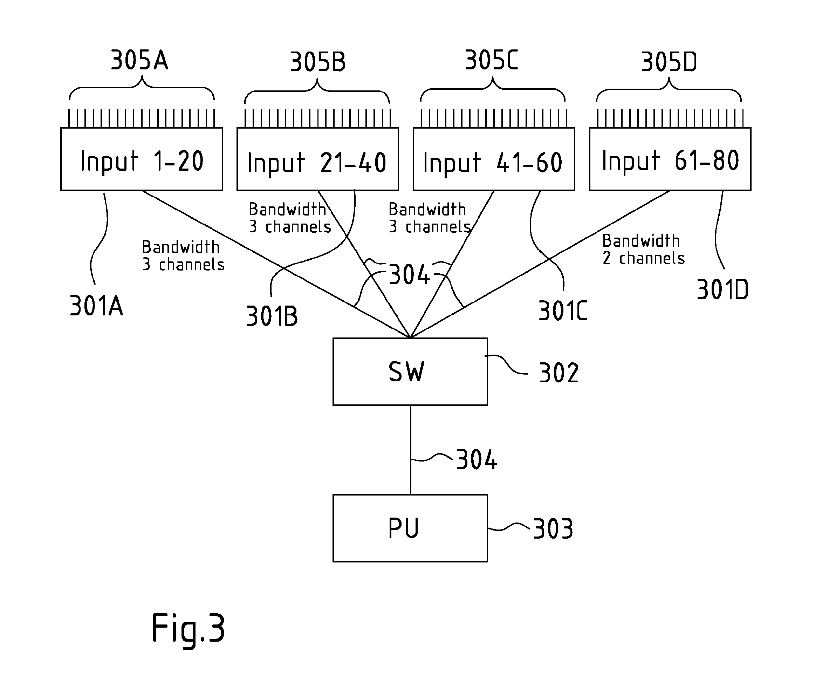

In practice there is no difference in the application of a conventional hardware-based vision mixer and the software-based vision mixer utilizing several processing units which are connected by an IP network. Though, the latter requires a much more careful bandwidth management. In a conventional hardware-based vision mixer for each input signal and dedicated hardware connection is provided and in consequence there is always sufficient bandwidth available for each input channel. In contrast to that, the links 210 between the processing units usually cannot carry all available input signals at the same time which will be explained in greater detail in conjunction with figure 3.

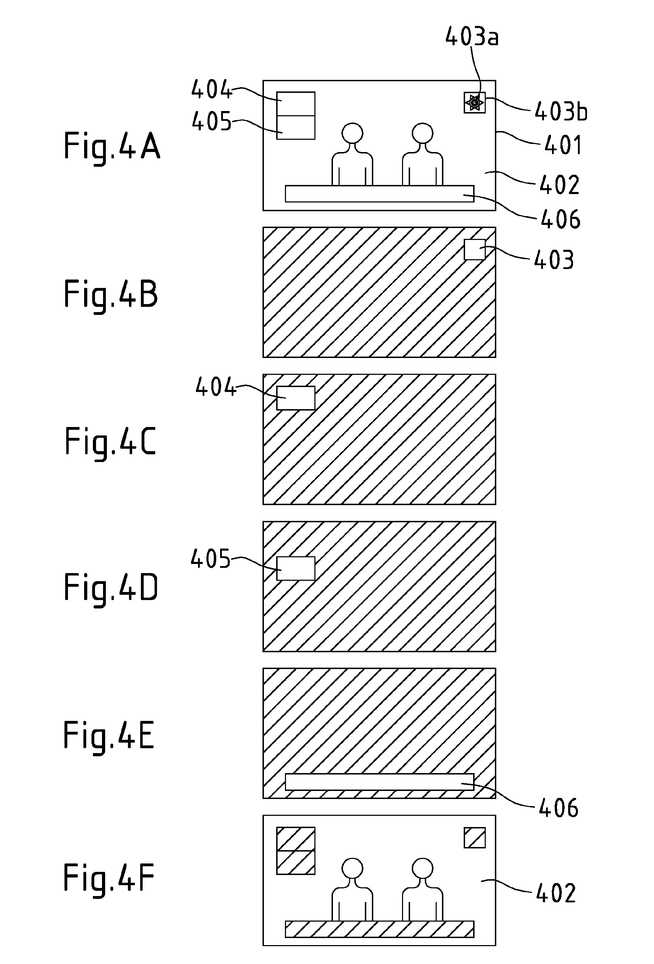

Figure 3 shows a different block diagram of a video/audio processing system of the type shown in figure 2. Figure 3 shows for input units 301A to 301D, one network switch 302 and one processing unit 303. The network switch 302 is connected by network links 304 with the input units 301A to 301D on the one hand and with the processing unit 303 on the other hand. In a practical embodiment the input units 301A to 301D are realized as computer servers. Each computer is equipped with several I/O cards or I/O modules each one having a number of BNC or SDI inputs. Each input unit 301A to 301D has 20 inputs 305A to 305D, i.e. the system has 80 signal inputs in total. The inputs 305A to 305D receive e.g. camera signals, output signals of digital video recorders etc. The network links are realized as an IP-based computer network providing a data rate from 6 to 10 GB. In other embodiments the network can provide a data rate from 40 to 100 GB. In figure 4A it is assumed that each input signal has the same bandwidth and thus the guaranteed data rate enables the data links 404 to transfer a defined number of input signals because the required bandwidth for one input signal is known. One input signal is also called "channel". Figure 3 shows the guaranteed data rate as an integer multiple of channels. It can be seen that in the example shown in figure 3 input units 301A, 301B, and 301C can transfer 3 input signals (channels) to the network switch 302 and input unit 301D two input signals (channels), respectively.

However, in current video productions the production signal is a composed image (or composed signal) consisting of many different source signals. A typical example of such composed images are news programs, sales programs etc. where significant portions of the image consists of inserted advertisements, stock market information, breaking news and the like as inserted tiles or bars. Most of the times the bottom and/or the left section of the image are/is composed of the mentioned tiles or bars. The total number of input signals involved to create the composed image can easily reach approximately 15. Since today each of the involved signals is transferred in full bandwidth the network which connects input units and processing unit would need to provide sufficient bandwidth to transfer a corresponding number of channels. In addition to that, each image insertion consists of two signals: One signal (the "fill-signal") which contains the actual image information and a second signal which contains the information how the first signal should be inserted into a background signal. This second signal is called "key-signal" (in common computer graphic programs this is called the "alpha channel") and comprises a chrominance signal component and a luminance signal component. However, the key-signal never contains any chrominance information. The luminance information in the luminance signal component defines the way of insertion. In the simplest case the luminance signal component is black (0% signal level) for areas which are not inserted and white (100% signal level) for areas which are inserted. For areas with transparent insertion (e.g. a Logo has an out-fading border) the key-signal goes gradually from 100% to 0%. In practice the fill-signal is multiplied with the luminance value k of the key-signal representing the signal level of the luminance signal component and the main input signal (background signal) is multiplied with the factor (1-k) to make a "hole" into which the fill-signal is filled in by superposing the two signals in the composed image. The luminance value k varies linearly from 1 to 0 corresponding to 100% and 0% signal level, respectively. Obviously, the transferred image portion must always include the complete area where the luminance value k of the key-signal is different from 0. For the key-signal in any case only the luminance component has to be considered. Therefore, in an embodiment of the present invention the chrominance signal component of the key-signals is not transfered which saves 50% bandwidth for this channel as a start. Regardless of the saving of bandwidth by eliminating the chrominance signal component of the key-signal, still the necessary bandwidth to transfer all these signals is simply not available in IP networks as it has been described with regard to figure 3.

The method according to the present invention therefore suggests additionally another approach which will be described in connection with figures 4A to 4F.

Figure 4A displays the composed image of a sales program. The composed image 401 or signal is displayed on a screen in the same way as a user sees the composed image when watching the sales program on a TV. The main portion 402 of the image 401 is a studio situation where two persons have a conversation e.g. about a new product. In the following we will call this input signal the main input signal. In the upper right corner of the composed image 401 there is a logo 403a of the broadcast channel. The area around the logo 403a is indicated with the reference number 403b. In the left section of the image 401 there are two inserted tiles or picture-in-pictures 404 and 405 showing advertisements. Finally, there is a text bar 406 inserted in the bottom section of the image 401. Even though the composed image 401 shown in figure 4A is somewhat simplified because it consists of only 9 different input signals (main input signal of main portion 402, fill-signal and key-signal of logo 403a, advertisements 404 and 405, and text bar 406; i.e. 1 + 4 x 2 = 9) it is nevertheless well-suited to explain the principle of the present invention.

Figure 4B shows the input signal for the logo 403a. It is noted that only the part of the corresponding input signal which is actually displayed in image 401 and associated with area 403b is transferred to the processing unit. The hatched part of this input signal is not transferred and thus the required bandwidth for transferring the signal is reduced significantly, e.g. by 80 to 90%. Similarly, figures 4C, 4D and 4E show the input signals of the first advertisement tile 404, the second advertisement tile 405, and the text bar 406. For all of these input signals the hatched signal part representing the hatched area in the image 401 is not transferred. Likewise the corresponding key-signals are not transferred for the hatched areas shown in figures 4B to 4E. Since the main input signal is completely transmitted the user can fade-in or fade-out all insertions at his discretion. In general terms the described approach is based on transmitting only the relevant content of an input signal. The relevant content of the input signal corresponds to the relevant part of the input signal. A prerequisite for this approach is that the relevant content is and remains at a predefined position in the image and has an invariable predetermined size.

However, there may be situations where such kind of flexibility is less important compared with limiting the bandwidth regardless of how many input signals are used to create the composed image. An alternative embodiment illustrated in figure 4F therefore does not transmit the signal parts of the main image signal which are later replaced by image insertions. In this case, however, fading-out of the inserted tube portions in the composed image is no longer feasible because there would remain dark areas in the composed image 401 corresponding to the hatched areas shown in figure 4F. Regardless of how many input signals are used to create the composed image the required bandwidth to transmit the composed image remains at one single channel. Figure 4F shows the input signal for the main portion 402 of the image 401. As it is illustrated by hatched areas in figure 4F the previously identified relevant portions of the other input signals are cut out from the main input signal. In the same way as described with regard to figures 4B to 4E the parts of the main input signal corresponding to the hatched areas is not transmitted by the input unit.

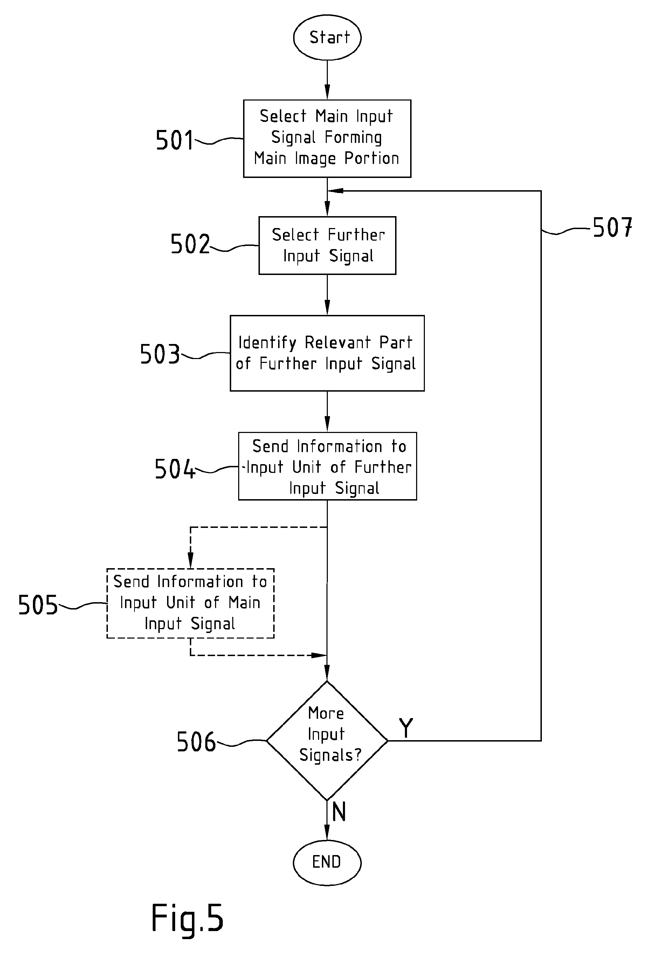

The way how the approach of the inventive method is realized in practice will be described in further detail related to the flow diagram shown in figure 5.

In a first step 501 the user operating a video/audio processing system looks at the available input signals one by one and selects the main input signal which shall be used for the main image portion 402. In step 502 the user looks again at the other available input signals one by one and selects a further input signal to be used in the composed image. Once the further input signal is selected then the user identifies in step 503 the relevant part of the input signal corresponding to the relevant portion in the composed image. E.g. for the input signal providing the logo 403a only the input signal part corresponding to the area 403b where the logo 403a is displayed is relevant. In step 504 the information about which part of the input signal is relevant is communicated in terms of coordinates describing the area in the composed image where the relevant part of the input signal is used. The input unit providing the input signal receives the information and in response transmits only the corresponding signal part henceforward. In step 506 the user decides if he wants to integrate more input signals into the composed image. If the answer is yes then the process begins again with step 502 as it is indicated with feedback loop 507. This process is repeated for all input signals until all relevant parts of input signals selected by the user for the composed image are defined and the corresponding information has been communicated to the input units providing the relevant input signals. Since the user only looks at a single input signal at a time only bandwidth for transmitting a single channel is required during the selection process.

The processing unit replaces the areas in the main portion of the image with the relevant portions of the other input signals. The relevant parts of the other input signals are supplementary to the main input signal and therefore the required bandwidth increases with an increasing number of input signals.

In the alternative embodiment related to figure 4F where parts of the main input signal are not transmitted an additional step 505 is required which is indicated in figure 5 with dashed lines. In step 505 the same information about the relevant portions of the input signals is transmitted to the input unit providing the main portion of the composed image. In connection with the main input signal the information is used in a complementary way, i.e. the identified portion of the main input signal is no longer transmitted to the processing unit. The advantageous consequence of this approach is that no matter how many input signals are used to create the composed image only the bandwidth corresponding to a single channel is needed because for every supplementary part of an additional input signal a corresponding part of the main input signal is removed.

The method according to present invention effectively limits in a video/audio processing system comprising a plurality of input and processing units which are connected by an IP network bandwidth requirements for producing composed images.

### List of reference numbers

- 100: vision mixer
- 102: crosspoint matrix
- 103: input signals
- 104: output signals
- 105: mixing and a video effect stage
- 106: process video output signal
- 107: input unit
- 108: control bus
- 109: control unit
- 111: control box
- 112: control box
- 200: processing system
- 201: processing unit
- 202: external sources
- 203: processing unit
- 204: external sources
- 205: processing unit
- 206: local sources
- 207: processing unit
- 208, 209: output signals
- 210: data links
- 301A- 301D: input unit
- 302: network switch
- 303: processing unit
- 304: network link
- 305A - 305D: inputs
- 401: composed image
- 402: main portion
- 403a: logo
- 403b: area of the logo
- 404, 405: advertisement tiles
- 406: text bar

## Claims

1. Method of operating a video/audio processing apparatus, wherein the system comprises a plurality of input units and a processing unit connected by data links for communicating packetized data, wherein the method comprises the following steps:
a) receiving input signals (305A - 305D) at the input units (301A - 301D);
b) selecting a main input signal which forms a main portion (402) of a composed image (401);
c) selecting an additional input signal to form a portion (403 - 405) of the composed image (401) at a predefined position and of a predefined size in the composed image;
d) selecting this portion of predefined size and of predefined position in the composed image (401);
e) sending information about the selected image portion (403 - 405) to the input unit which transmits the additional input signal to transmit only the part of the input signal forming this selected portion of the composed image.

2. Method according to claim 1, wherein the method further comprises the step of repeating the steps c) to e).

3. Method according to claim 1 or 2, wherein the method further comprises the step of sending the information about the selected image portion (403 - 405) to the input unit which provides the main input signal to prevent this input unit from sending the part of the main input signal which corresponds to the selected image portion.

4. Method according to one or several of claims 1 to 3, wherein the method further comprises the step of processing the selected input signals on the level of the processing unit (303) to form the composed image (401).

5. Method according to one or several of the preceding claims, wherein the method further comprises the step of generating a key-signal for inserting the additional selected input signal into the main input signal.

6. Method according to claim 5, wherein the method further comprises the step of transmitting the key-signal to the processing unit only as a luminance signal.

7. Processing apparatus adapted for executing the method according to one or several of the preceding claims.
